# EUROPEAN PATENT APPLICATION

(11) **EP 3 851 229 A1**
(43) Date of publication of application: **21.07.2021**
(21) Application number: 21151099.5
(22) Date of filing: 12.01.2021
(51) Int. Cl.: B23B 5/28, B23B 5/32

(54) **LIFT-CENTERING SYSTEM FOR A WHEEL LATHE**

(30) Priority: 14.01.2020 RU 2020100937
(71) Applicant: Joint-stock company "Export-industrial firm" Sudotechnologia", Sankt-Petersburg 194362 (RU)
(72) Inventor: Batsov, Sergey Vladislavovich, Sankt-Peterburg 197341 (RU); Avsyukevich, Dmitry Alekseevich, Sankt-Peterburg 197022 (RU); Engelovskikh, Sergei Ivanovich, Leningradskaya oblast 188423 (RU); Mauro, Birri, 33050 Pozzuolo del Friuli (UD) (IT); Marko, Testa, 33170 Pordenone (PN) (IT)
(74) Representative: Ferreccio, Rinaldo

(57) **Abstract**

The invention relates to wheel lathe with a lifting-centering system, intended for installation in a pit below the rail head in indoor heated rooms, and can be used for lifting and centering wheel sets and brake discs of rolling stock when processing surface rolling and with a maximum load of up to 40 tons per axle. In a wheel lathe containing a lift-centering system, including two symmetrically located balancers with spindle rollers, and two drive racks made with the possibility of vertical movement and impact on the balancers to transmit rotational motion to the wheel being processed, each rack is made in the form of a trapezoidal screw connected to the drive motor shaft , and installed on the specified screw by means of the internal thread of the quill, which is fixed against rotation and is provided from above with an end support with push rollers. The technical result consists in increasing the strength and expanding the possibilities of varying the processing modes due to the developed lifting centering system 4 fails, 6 pics.

## Description

The invention relates to the field of machine tools, namely, wheel lathe without rolling out with a lifting centering system, intended for installation in a pit below the rail head in indoor heated rooms, and can be used for lifting and centering wheel sets and brake discs of rolling stock when processing the rolling surface and with a maximum load of up to 40 tons per axle.

A wheel lathe with a system is known from the prior art, comprising two symmetrically arranged balancers with spindle rollers fixing the cutting tools, and two drive posts made with the possibility of vertical movement and acting on the balancers to bring the cutting tool into interaction with the wheel being machined (see patent CN206296458U , cl. B23B 5/32, published. 04.07.2017). The main disadvantages of the known device are the complexity of manufacture and a relatively short service life due to the rapid failure of the drive racks due to large values of horizontal loads.

A technical problem is the elimination of these disadvantages and the creation of a robust and easy-to-use machine with a compact lifting centering system. The technical result consists in increasing the strength and expanding the possibilities of varying the processing modes due to the developed lifting centering system. The problem is solved, and the technical result is achieved by the fact that in a wheel lathe containing a lifting centering system, including two symmetrically located balancers with spindle rollers, and two drive racks, made with the possibility of vertical movement and impact on the balancers to transfer rotary motion to the processed wheel, each rack is made in the form of a trapezoidal screw connected to the drive motor shaft and mounted on the specified screw by means of an internal thread of the quill, which is fixed against rotation and is provided with an end support with push rollers from above, and the corresponding balancer is provided from below with a cam plate, which is acted upon by said push rollers. Each balancer is preferably additionally equipped with a hydraulic cylinder to ensure that the broadcast roller is pressed against the wheel. Each rack is preferably equipped with its own independent drive motor with encoder. Each quill is preferably provided with keys (wedges) to prevent it from rotating. The trapezoidal screw is preferably secured to the base of the strut with a radial thrust bearing.

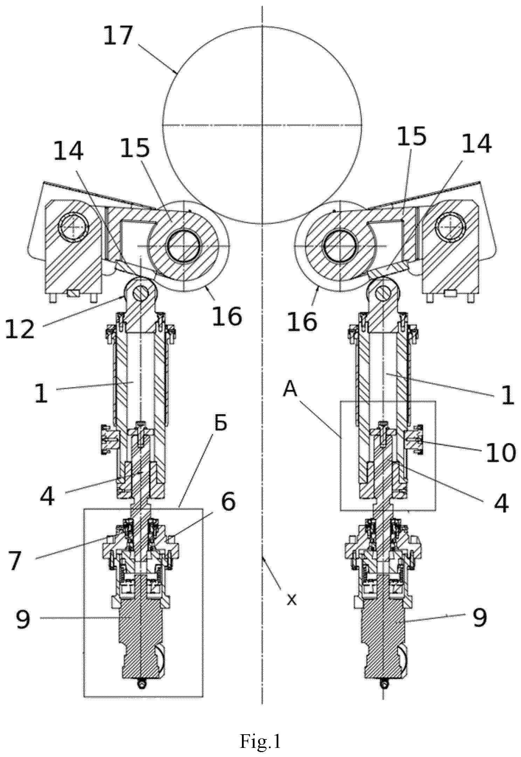

Figure 1 shows the main elements of the proposed lifting centering system of the machine in section in the plane of the wheel;

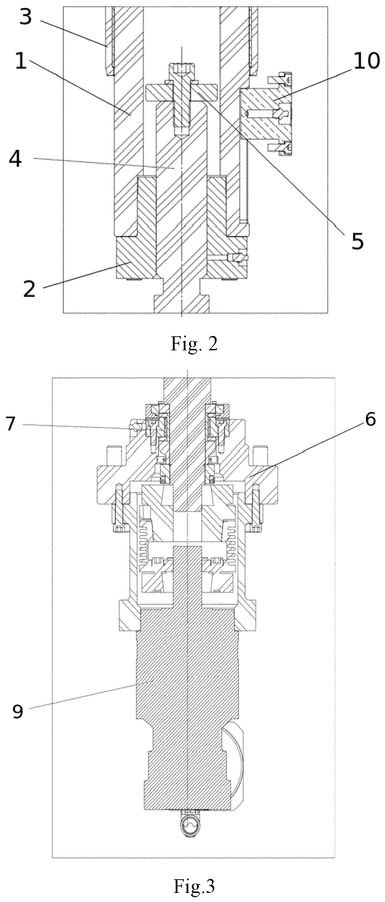

figure 2 - node A of figure 1;
figure 3 - node B of figure 1;

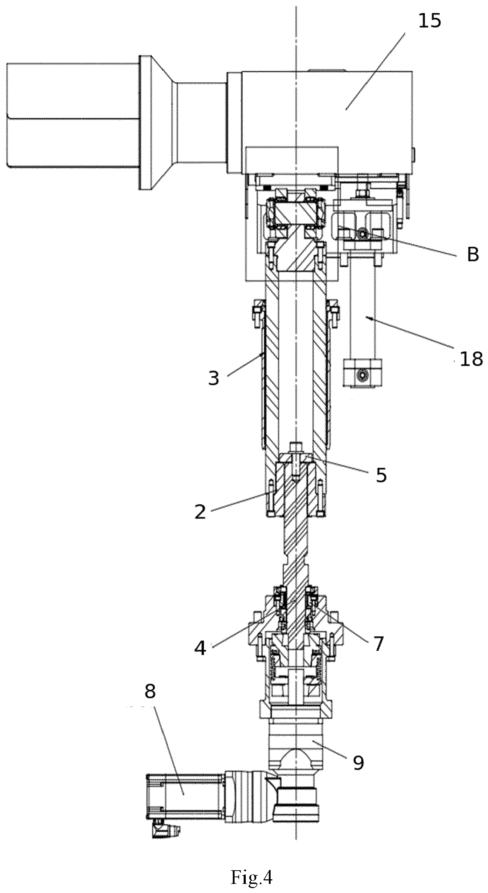

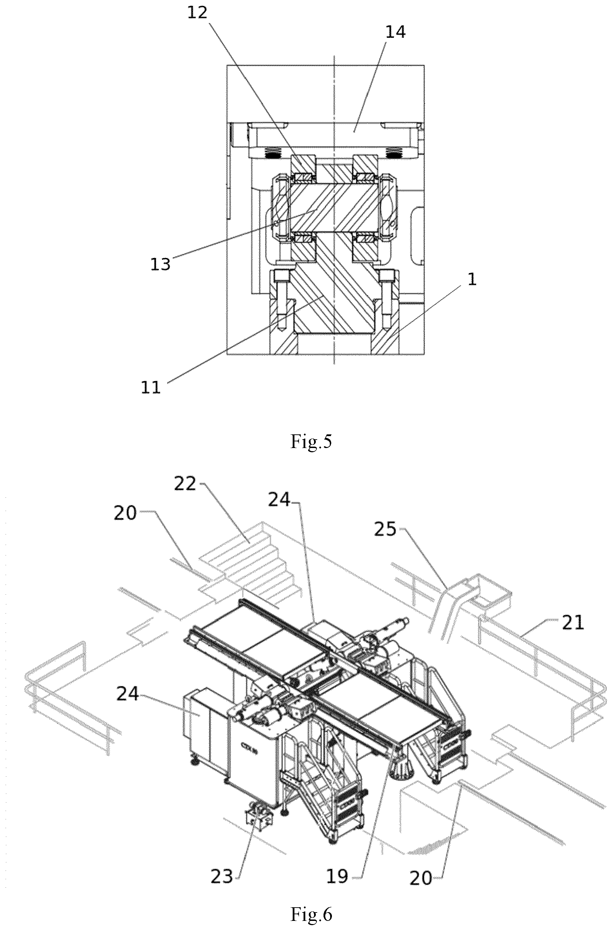

figure 4 - one of the racks in section in the plane perpendicular to the wheel; figure 5 - node B of figure 4;
figure 6 is a general view of the working area.

A wheel lathe without roll-out is a special machine designed for the processing of rolling surfaces of wheels and brake discs, which does not require dismantling of wheel sets, which are subject to normal wear and deformation that occurs due to the rail-wheel contact.

The proposed lifting centering system of the machine consists of two quills 1, symmetrical about the X axis, with an internal thread on a nut 2, each of which is installed in a sleeve 3 and is set in vertical motion by a trapezoidal screw 4 with a stopper 5. The screw 4 is installed in the support 6, and the vertical load is supported by the combined thrust-radial bearing 7 on the screw head 4. Due to the appropriate choice of the ratio between the diameter and the pitch of the screw 4, the threaded pair is self-locking in any position.

The screw 4 is driven by being connected to the shaft of an independent drive motor 8 (brushless synchronous or asynchronous or stepper motor with a power of 1 to 3 kW) of the appropriate size with an absolute encoder through a gearbox 9, which accurately determines the position of the system at any time. To prevent the rotation of the quill 1 around their own axis during lifting and lowering, they are equipped with keys 10.

On the opposite side, at the end of each quill 1, there is an end support 11 with a pair of pusher rollers 12 of the corresponding size, mounted on the axle 13. The push rollers 12 are in contact with the cam plate 14, which is fixed to the balancers 15. The function of the plate 14 is to convert the vertical movement of the quill 1 into the rotational movement of the balance beams 15. The balancers 15 are equipped with rotary rollers 16, through the interaction of which with the wheel 17 to be processed, rotational movement is transmitted to it.

Each balancer 15 is additionally equipped with a hydraulic cylinder 18 that pushes the rotary roller 16 against the wheel 17, thus ensuring traction for turning operations.

The immobility of the train axis during the operation of the machine is guaranteed by the support of the axle boxes and load drives. The fastening of the wheel 17 occurs due to the friction of the push rollers 12 on the rolling surface. The use of these pusher rollers 12 increases the coefficient of friction, thereby increasing the frictional force and therefore the cutting power. The machine can additionally be equipped with a floating or damping system along two axes (compensation) so that deformations of the rolling surface do not become forces applied to the axis; this ensures that the machining is free of ovality. The use of twin tools, depending on the power consumption, avoids problems with long chips and provides better machining on external and internal roundings. The cutting edge of the tool is located along the axis of the wheel being machined, so the cutting angle does not depend on the diameter of the wheel being machined, which ensures optimal cutting power.

The presence of a diameter gauge on the saddle allows measurements to be carried out at any point of the profile, which provides significant advantages in terms of accuracy and the possibility of measuring the diameter on different types of profiles with a control circle at different distances from the inner surface of the wheel. The machine is installed below the zero rail, which is more economical in terms of installation and improves ergonomics.

The proposed lifting centering system of the machine works as follows.

The wheel lathe with the proposed lifting centering system is located in the center of the pit, and connected through the movable system 19 of the rails to the workshop track 20. The working cycle takes place with the participation of the operator. The operator is in a protected area in front of the working area, from where he controls the processing and preparation phases using the operator panel. During the phases of the cycle, when the train is stopped, the operator has access to the top of the machine and therefore to the outer parts of the bogie in order to carry out the manual operations necessary to clamp or unclamp the axle box of the wheelset. During the steps required to prepare the cutting tool, the operator has access to the work area, which can be accessed by unlocking and opening part of the guard 21. During maintenance, the operator has access to the entire perimeter of the machine and components. Access to and exit from the pit is carried out through staircase 22, which is part of the foundation. The auxiliary equipment necessary for the operation of the machine is in the standard version located inside the pit. The elements are lifted using a hydraulic block 23. The machine is powered from electrical cabinet 24. Cut residues are removed from the pit using the chip removal system 25.

The functional groups that make up the machine perform the following functions:
a) delivery and unloading of the vehicle
b) lifting, centering and clamping the workpiece
c) measuring and processing the workpiece
d) auxiliary groups

The groups of supply and unloading of the vehicle (a) are necessary to ensure the passage of the vehicle, the wheelset of which must be processed over the working area: a system of rails 19 is present at the entrance and exit of the lathe, connecting it to the track 20 of the workshop.
A retractable rail system housed in a fixed rail system allows the vehicle to be positioned over the center of the machine. Once the wheelset is clamped, the retractable rail system provides a complete machining cycle, freeing up the working area.

Once the vehicle is positioned so that the machining wheelset is in the center of the working area, the automatic lift system (b) will center the vehicle and raise the wheelset by pushing and touching the synchronized lift rollers. At this point, the operator will have to install two base plates and corresponding adapters under the axleboxes of the wheelset. These base plates are lifted by lifting two jacks, which are driven by motors and adjusted by operator intervention: the presence of contact between the plates and the axle boxes is monitored by appropriate sensors. After contact with the axle boxes has been achieved, the lifting system of the parts is removed and the weight of the part is completely transferred to the jacking system: the support of the piece weight is due to the irreversibility of the jack system. If the mass of the wheelset to be processed is not enough, the operator can enhance the grip of the part using an additional clamping system; therefore, a number of gripping elements come into contact with axle boxes, which approach and are brought into position in an auxiliary way, but always under the control of the operator. After the part is clamped, the slide rails are pulled out to free up the work area. The working blocks are two longitudinal slides, which move along high-precision rolling guides, are driven by screws rotated by numerical control (CNC) servomotors: they are equipped with groups of tools and systems for measuring and processing the workpiece (c). These groups are necessary to determine the position of the workpiece and set the reference "zero" for subsequent processing operations. The wear condition of the wheel profiles and possibly the brake discs, if they are to be machined, is measured in order to select the optimum cutting conditions.

The rotation of the part occurs due to the traction of motorized rotary rollers 16, which are appropriately pressed against the surface of the wheels 17: they are able to compensate for the reduction in diameter due to machining and possible surface defects of the machined wheels. The tool groups are also CNC controlled and allow the required tool path and wheel reprofiling by coordinating the movement with the longitudinal carriages.

The machine is capable of reprocessing a worn wheelset and brake discs, if any. To do this, it is necessary to know the geometry of the brake discs and the overall dimensions of the adjacent units near the axle of the wheelset in order to study the machining process and, if necessary, adjust special tools. After processing, a measurement cycle is performed to determine if processing is correct and, if necessary, generate a report.

At the end of the processing cycle, the operator begins the phase of unloading the wheelset. First, additional clamps are manually retracted, then the lifting rollers come into contact with the wheel and lift the axle boxes from the support plates. The slide rails are brought to the center position, the base plates are lowered and the lifting rollers are lowered to mount the wheelset on the slide rails. At this moment, the semaphore signals the possibility of safe movement of the vehicle.

The auxiliary groups (d) supplied with the machine can perform various functions - these can be: suction unit for removing generated when handling smoke and dust in the work area, a grinder under the work area to reduce the size of chips, a chip removal device to discharge the chips from the sump into a collection box, a hydraulic and lubrication center to generate the required power and distribute the correct amount of lubricant at the points and in the correct modes , a cabinet kit with gripper adapters, tools and cam plates, and an optional printer and / or computer for any remote connections and print run-time measurement report.

The expected cycle time is 35 minutes, taking into account rigging (selection of attachments and rigging), wheelset clamping, wheelset measurement, reprofiling with one pass of 5mm on the tread surface, final measurement, wheelset unloading.

The advantages of the proposed lifting centering system of the wheel lathe are to increase the compactness, eliminate horizontal forces on the axles to increase strength, provide the possibility of modulating the force (and, therefore, the engine torque) for lifting the train using the balance bar; optimization of the force (engine torque) and, consequently, the installed power by selecting the shape of the cam plate, minimizing vertical travel and increasing rigidity, making it possible to adjust the cam plate profile to perform various passes without changing other components of the overall system (in this case, the single-sided cam system spindle compensation system, which avoids loads due to possible deviations from the roundness of the wheels of the mechanical system).

## Claims

1. Lifting centering system of a wheel lathe, containing two symmetrically located balancers with spindle rollers, and two drive racks made with the possibility of vertical movement and impact on the balancers to bring the rollers into interaction with the processed wheel, **characterized in that** each rack is made in the form of a trapezoidal screw, connected to the drive motor shaft, and mounted on the specified screw by means of the internal thread of the quill, which is fixed against rotation and is provided from above with an end support with pusher rollers, and the corresponding balancer is provided from below with a cam plate on which the specified pusher rollers act.

2. The elevating-and-centering system of the wheel lathe according to claim 1, **characterized in that** each balancer is additionally equipped with a hydraulic cylinder, which ensures guaranteed compression of the rotary roller to the wheel.

3. The elevating-and-centering system of the wheel lathe according to claim 1, **characterized in that** each rack is equipped with its own independent drive motor with an encoder.

4. The elevating-and-centering system of the wheel lathe according to claim 1, **characterized in that** each pin is provided with dowels that prevent its rotation.

5. The elevating-and-centering system of the wheel lathe according to claim 1, **characterized in that** the trapezoidal screw is fixed at the base of the stand with a thrust-radial bearing.
